# EUROPEAN PATENT SPECIFICATION

(11) **EP 3 723 172 B1**
(45) Date of publication and mention of the grant of the patent: **14.08.2024**
(21) Application number: 18885458.2
(22) Date of filing: 04.12.2018
(51) Int. Cl.: H01M 4/36, H01M 4/525, H01M 4/505, C01G 53/00, H01M 10/052, H01M 4/131, H01M 4/1391, H01M 4/04, H01M 10/0525, H01M 4/02

(54) **POSITIVE ACTIVE MATERIAL FOR RECHARGEABLE LITHIUM BATTERY, PREPARING METHOD THEREOF AND RECHARGEABLE LITHIUM BATTERY COMPRISING POSITIVE ELECTRODE INCLUDING POSITIVE ACTIVE MATERIAL**
KATHODENAKTIVMATERIAL FÜR LITHIUMSEKUNDÄRBATTERIE, HERSTELLUNGSVERFAHREN DAFÜR UND LITHIUMSEKUNDÄRBATTERIE MIT KATHODE DAMIT
MATÉRIAU ACTIF DE CATHODE POUR BATTERIE SECONDAIRE AU LITHIUM, SON PROCÉDÉ DE FABRICATION ET BATTERIE SECONDAIRE AU LITHIUM COMPRENANT UNE CATHODE COMPRENANT CE MATÉRIAU ACTIF

(30) Priority: 04.12.2017 KR 20170165431; 03.12.2018 KR 20180153649
(43) Date of publication of application: 14.10.2020
(73) Proprietor: Samsung SDI Co., Ltd., Yongin-si, Gyeonggi-do 17084 (KR)
(72) Inventor: KIM, Jongmin, Yongin-si Gyeonggi-do 17084 (KR); KIM, Jiyoon, Yongin-si Gyeonggi-do 17084 (KR); KIM, Jinhwa, Yongin-si Gyeonggi-do 17084 (KR)
(74) Representative: Marks & Clerk LLP
(86) International application number: PCT/KR2018/015220
(87) International publication number: WO 2019/112279

(56) References cited:
- EP-A1- 1 876 664
- EP-A1- 2 169 745
- JP-A- 2015 076 397
- KR-A- 20030 045 853
- KR-A- 20160 129 764
- KR-A- 20170 063 408
- KR-B1- 101 593 401

## Description

### [Technical Field]

A positive active material for a rechargeable lithium battery, a preparing method thereof, and a rechargeable lithium battery including a positive electrode including the same are disclosed.

### [Background Art]

As portable electronic devices, communication devices, and the like are developed, there is a need for development of a rechargeable lithium battery having a high energy density.

A positive active material of a rechargeable lithium battery may be a lithium nickel manganese cobalt composite oxide, a lithium cobalt oxide, and/or the like. When such positive active materials are used, the cycle-life of a rechargeable lithium battery may be decreased, resistance may be increased, and capacity characteristics may be insufficient due to cracks generated in the positive active material as charging and discharging are repeated.

### [Disclosure]

### [Technical Problem]

A positive active material for a rechargeable lithium battery having improved stability and electrochemical characteristics due to decreased residual lithium and preparing method thereof are provided.

A rechargeable lithium battery having improved cell stability by including a positive electrode including the positive active material for a rechargeable lithium battery is provided.

### [Technical Solution]

According to an embodiment, a positive active material for a rechargeable lithium battery includes a first positive active material including a secondary particle including at least two agglomerated primary particles, where at least one part of the primary particles has a radial arrangement structure; and a second positive active material having a monolith structure, wherein both of the first positive active material and the second positive active material are a nickel-based positive active material.

According to another embodiment, a method of preparing a positive active material for a rechargeable lithium battery includes subjecting a first precursor to a first heat-treatment in an oxidizing gas atmosphere to obtain a first nickel-based oxide, subjecting a second precursor to a second heat-treatment in an oxidizing gas atmosphere to obtain a second nickel-based oxide, mixing the first nickel-based oxide and the second nickel-based oxide, and subjecting the mixture to a third heat-treatment in an oxidizing gas atmosphere to obtain a positive active material including a first positive active material and a second positive active material, wherein the second nickel-based oxide includes particles having a monolith structure.

Another according to an embodiment, a rechargeable lithium battery includes a positive electrode including the positive active material for a rechargeable lithium battery, a negative electrode, and an electrolyte disposed between the positive electrode and the negative electrode.

### [Advantageous Effects]

The present disclosure may provide a positive active material for a rechargeable lithium battery having reduced residual lithium and excellent stability and electrochemical characteristics, and a method for producing the same.

Also, it is possible to provide a rechargeable lithium battery including the positive active material for a rechargeable lithium battery and having improved cell stability.

### [Description of Drawings]

FIG. 1 is a schematic view showing shapes of the primary particles according to an embodiment,
FIG. 2 is a schematic view describing a radial shape of a secondary particle according to an embodiment,
FIG. 3 is a schematic view showing a cross-sectional structure of a secondary particle according to an embodiment, and
FIG. 4 is a schematic view showing a structure of a rechargeable lithium battery including a positive electrode including a positive active material for a rechargeable lithium battery according to an embodiment.

### <Description of Symbols>

| | | | |
|---|---|---|---|
| 21: | rechargeable lithium battery | 22: | negative electrode |
| 23: | positive electrode | 24: | separator |
| 25: | battery case | 26: | cap assembly |

### [Best Mode]

The present disclosure will be described more fully hereinafter with reference to the accompanying drawings, in which example embodiments of the present disclosure are shown. The drawings and description are to be regarded as illustrative in nature and not restrictive. Like reference numerals designate like elements throughout the specification and duplicative descriptions thereof may not be provided.

In many embodiments, elements having the same structure are represented by the same reference numerals and are described in the represented embodiment, and only the different structures will be described in the other embodiments.

In an embodiment, for sizes or particle diameters of various particles, although they may be numerized by a measurement to show an average size of a group, the generally used method includes a mode diameter showing the maximum value of the particle size distribution, a median diameter corresponding to the integral center value of the particle size distribution curve, one or more average diameters (e.g., numeral average, length average, area average, mass average, volume average, etc.), and/or the like. Unless otherwise specified, the average sizes or average particle diameters as reported in this disclosure refer to numeral average sizes or numeral average diameters, and may be obtained by measuring D50 (the particle diameter at the 50th percentile of the particle size distribution).

In an embodiment, the term "monolith structure" refers to a structure in which a morphology of each particle is separated and/or dispersed in independent phases separated from each other.

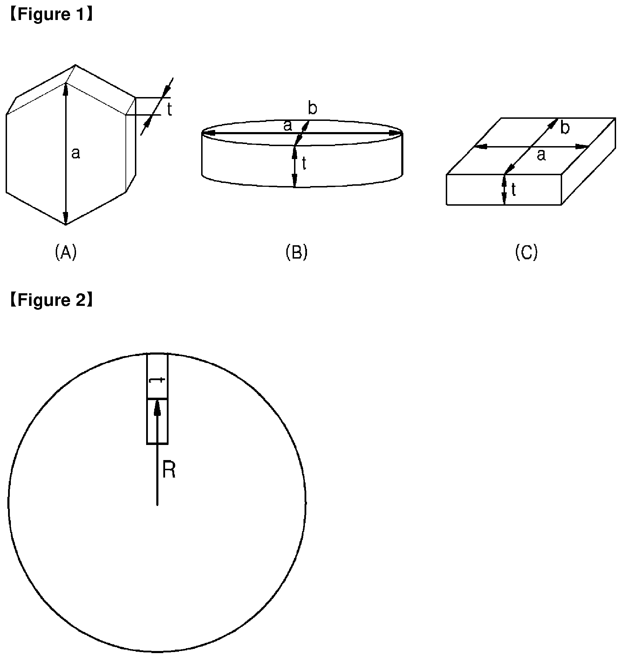

Hereinafter, referring to FIGS. 1 to 3, a positive active material for a rechargeable lithium battery according to an embodiment is described.

A positive active material for a rechargeable lithium battery according to an embodiment includes a first positive active material including a secondary particle including at least two agglomerated primary particles, and a second positive active material having a monolith structure. At least one part of the secondary particle may have a radial arrangement structure, and both of the first positive active material and the second positive active material may be or include a nickel-based positive active material.

Hereinafter, the first positive active material according to an embodiment is described.

The first positive active material may include a secondary particle including at least two agglomerated primary particles. At least one part of the primary particles may have a plate shape. The primary particles may have a thickness that is smaller than a long-axis length (plane direction). Herein, the long-axis length may refer to a maximum length of the largest surface of the primary particles. That is, the primary particles may have a structure where a length (t) in one direction (i.e., thickness direction) is smaller than a long-axis length (a) in another direction (i.e., plane direction).

FIG. 1 is a schematic view showing shapes of the primary particles according to an embodiment.

Referring to FIG. 1, a primary particle according to an embodiment may have various shapes such as (A) a polygonal nanoplate shape such as hexagon and/or the like, (B) a nanodisk shape, and/or (C) a rectangular parallelepiped shape, each having a basic plate-shaped structure.

On the other hand, the thickness t of the primary particles may be smaller than the plane direction lengths a and b. The length a in the plane direction may be larger than b, or may be the same as b. In an embodiment, in the primary particles, the direction in which the thickness t is defined may be referred to as a thickness direction and a direction including the lengths a and b may be referred to as a plane direction.

The first positive active material according to an embodiment may have irregular porous pores in the internal part and/or in the external part of the secondary particle. The term "irregular porous structure" may refer to a structure in which the pore sizes and shapes are not regular and do not have uniformity. The internal part of the irregular porous structure may include primary particles like the external part thereof. The primary particles in the internal part of the secondary particle may be arranged without regularity, unlike the primary particles in the external part.

The term "external part" may refer to a region within about 30 length% to about 50 length% from the outermost surface, for example, about 40 length% from the outermost surface with respect to the distance from the center to the surface of the secondary particle, or may refer to a region within about 2 µm from the outermost of the secondary particle. The term "internal part" may refer to a region within about 50 length% to about 70 length% from the center, for example, within about 60 length% from the center with respect to the distance from the center to the surface of the secondary particle, or a remaining region excluding the region within about 2 µm from the outermost surface of the secondary particle.

On the other hand, the secondary particle of the first positive active material according to an embodiment may include an open pore with a size of less than about 150 nm, for example, about 10 nm to about 148 nm toward the center of the internal part. The open pore may be an exposed pore into which an electrolytic solution flows in and out. According to an embodiment, the open pore may be formed at a depth of less than or equal to about 150 nm, for example, about 0.001 nm to about 100 nm, or about 1 nm to about 50 nm, on average, from the surface of the secondary particle.

The first positive active material according to an embodiment may include a secondary particle formed by arranging the long axes of at least one part of the primary particles in a radial direction. At least one part of the primary particles may have a radial arrangement. FIG. 2 is a schematic view describing a radial shape of a secondary particle according to an embodiment.

In an embodiment, the "radial" arrangement structure refers to a structure in which the thickness (t) direction of the primary particles are is arranged perpendicular to or within an angle of about ±5° of perpendicular with respect to the direction (R) toward the center of the secondary particles, as shown in FIG. 2.

On the other hand, the average length of the primary particles of the secondary particle may be about 0.01µm to about 5µm. For example, the average length may be about 0.01µm to about 2µm, about 0.01µm to about 1µm, more specifically about 0.02µm to about 1µm, or about 0.05µm to about 0.5µm. Herein, the term "average length" refers to an average of the average long-axis length and the average short-axis length in the plane direction of the primary particles, or an average particle diameter when the primary particles have a spherical shape.

An average thickness of the primary particles of the secondary particle may be, for example, greater than or equal to about 50 nm, greater than or equal to about 100 nm, greater than or equal to about 200 nm, greater than or equal to about 300 nm, greater than or equal to about 400 nm, greater than or equal to about 500 nm, greater than or equal to about 600 nm, greater than or equal to about 700 nm, greater than or equal to about 800 nm, greater than or equal to about 900 nm, greater than or equal to about 1 µm, greater than or equal to about 1.2 µm, greater than or equal to about 1.4 µm, and for example, less than or equal to about 13 µm, less than or equal to about 12 µm, less than or equal to about 11 µm, less than or equal to about 10 µm, less than or equal to about 9 µm, less than or equal to about 8 µm, less than or equal to about 7 µm, less than or equal to about 6 µm, less than or equal to about 5 µm, less than or equal to about 4 µm, less than or equal to about 3 µm, or less than or equal to about 2 µm. A ratio between the average thickness and the average length may be about 1:1 to about 1:10, for example about 1:1 to about 1:8, or about 1:1 to about 1:6.

As described above, when the average length, the average thickness, and the ratio between the average thickness and the average length of the primary particles satisfy the above ranges, a relatively large number of lithium diffusion paths between surface grain boundaries and crystal surfaces capable of transferring lithium to the external part may be exposed, such that lithium diffusivity are improved, and high initial efficiency and capacity may be enabled, when the sizes of the primary particles are sufficiently small and the primary particles are radially arranged in the external part. Also, when the primary particles are arranged radially, the pores exposed at the surface between the primary particles may be directed toward the center direction, thereby promoting lithium diffusion from the surface. When lithium is deintercalated and/or intercalated into the radially arranged primary particles, substantially uniform shrinkage and expansion may be enabled, and the presence of pores in a (001) direction, along which particles expand during lithium intercalation, may alleviate stress caused by expansion. The probability of cracks occurring during shrinkage and expansion may be lowered due to the small sizes of the plate-shaped primary particles, and the pores in the internal part may additionally alleviate stress caused by the volume changes, thereby decreasing crack generation between the primary particles during charging and discharging, improving cycle-life characteristics, and reducing a resistance increase.

Closed pores may be present in the internal part of the secondary particle and closed pores and/or open pores may be present in the external part of the secondary particle. The closed pores may exclude or mostly exclude an electrolyte, while the open pores may include an electrolyte therein. In the present specification, each closed pore may be an independent pore formed by closing the wall surfaces of the pore so that they are not connected to other pores; while the open pores may be formed as continuous pores connected to the outside of the particles when at least one part of each pore wall is formed to be an open structure.

The positive active material for a rechargeable lithium battery according to an embodiment may minimize direct contact between the cracked surface and the electrolyte solution even when cracks are generated, thereby suppressing an increase of a sheet resistance, due to the first positive active material as described above.

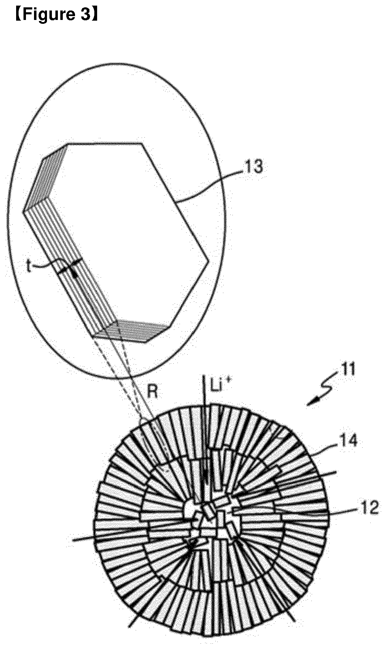

FIG. 3 is a schematic view showing a cross-sectional structure of a secondary particle according to an embodiment.

Referring to FIG. 3, the secondary particle 11 includes an external part 14 in which the plate-shaped primary particles 13 are arranged in a radial direction and an internal part 12 where primary particles 13 are irregularly arranged.

In the internal part 12, a larger amount of empty voids between the primary particles may be present compared to within the external part. The pore sizes and porosity in the internal part may be larger and more irregular than those in the external part. In FIG. 3, the arrow indicates a direction of lithium ion movement.

The secondary particle according to an embodiment may have a porous structure in the internal part, so that a diffusion distance of lithium ions to the internal part of the secondary particle may be decreased, and the external part of the secondary particle may be radially arranged toward the surface, so that lithium ions are easily intercalated into the surface. The sizes of the primary particles of the positive active material for a rechargeable lithium battery are small so that it is easy to secure a lithium transfer path between the crystal grains. In addition, the sizes of the primary particles are small and the pores between primary particles alleviate volume changes that occur during charging and discharging, minimizing or reducing particle stress when the volume changes during charging and discharging.

An average particle diameter of the secondary particle of an embodiment of the present disclosure may be about 1 µm to about 20 µm. For example, it may be about 0.05 µm to about 10 µm, about 1 µm to about 10 µm, or about 5 µm to about 15 µm. For example, it may be about 1 µm to about 5 µm, or about 10 µm to about 20 µm.

The secondary particle according to an embodiment may include radial primary particles and non-radial primary particles. An amount of the non-radial primary particles may be less than or equal to about 20 wt%, about 0.01 wt% to about 10 wt%, or about 0.1 wt% to about 5 wt% based on a total of 100 wt% of the radial primary particles and non-radial primary particles together. When the non-radial primary particles are included in the above range in addition to the radial primary particles within the secondary particle, a rechargeable lithium battery having improved cycle-life characteristics due to easy diffusion of lithium may be manufactured.

Hereinafter, a second positive active material according to embodiments of the present disclosure is described.

The second positive active material according to an embodiment may have a monolith structure. For example, the second positive active material may include or have a form in which a plurality of crystal particles are separated and/or dispersed so as to form independent and/or separated phases for each of the particles rather than a coagulated form, but two or three particles may be attached to each other.

The shape of the second positive active material is not particularly limited and may have a random shape such as a sphere, an oval, a plate-shape, and/or a rod.

The second positive active material according to an embodiment may be included in an amount of about 10 wt% to about 50 wt% based on a total weight of the positive active material for a rechargeable lithium battery. For example, the second positive active material may be included in an amount of greater than or equal to about 10 wt%, greater than or equal to about 15 wt%, greater than or equal to about 20 wt%, or greater than or equal to about 25 wt%, and for example, less than or equal to about 50 wt%, less than or equal to about 45 wt%, less than or equal to about 40 wt%, or less than or equal to about 35 wt%. When the second positive active material having a monolith structure is included within these ranges, residual lithium compounds remaining in the positive active material after synthesis of the active material may be minimized.

As described above, the second positive active material may have a monolith structure, and thereby a residual lithium concentration in the positive active material for a rechargeable lithium battery according to an embodiment may be for example less than or equal to about 1200 ppm, less than or equal to about 1100 ppm, less than or equal to about 1000 ppm, less than or equal to about 990 ppm, less than or equal to about 980 ppm, or less than or equal to about 970 ppm. Accordingly, the nickel-based active material having a large nickel content may secure a low residual lithium concentration within these ranges.

In an embodiment, the primary particles in the first positive active material and the second positive active material may each have distinguished size. An average particle diameter of the second positive active material may be about 0.05µm to about 10µm. For example, it may be about 0.1µm to about 10µm. For example, it may be about 0.1µm to about 5µm. In this way, the primary particles of the first positive active material and the second positive active material may each have distinguished size, so that a density of the positive active material for a rechargeable lithium battery according to an embodiment may be further increased.

On the other hand, the first positive active material according to an embodiment and the second positive active material may each independently be or include a nickel-based positive active material represented by Chemical Formula 1:

[Chemical Formula 1] Liₐ(Ni_{1-x-y-z}CoₓMn_{y}M_{z})O₂

wherein, in Chemical Formula 1, M is an element selected from boron (B), magnesium (Mg), calcium (Ca), strontium (Sr), barium (Ba), titanium (Ti), vanadium (V), chromium (Cr), iron (Fe), copper (Cu), zirconium (Zr), and aluminum (Al), and
0.95≤a≤1.3, x≤ (1-x-y-z), y≤ (1-x-y-z), 0 <x<1, 0≤y<1, and 0≤z<1. Here, in the nickel-based positive active material represented by Chemical Formula 1, the nickel content may be greater than or equal to the cobalt content and the nickel content may be greater than or equal to the manganese content.

In Chemical Formula 1, 0.95≤a≤1.3, for example, 1.0≤a≤1.1; 0<x≤0.33, for example 0.1≤x≤0.33; 0≤y≤0.5, for example 0.05≤y≤0.3; 0≤z≤0.05; and 0.33≤ (1-x-y-z) ≤0.95, for example 0.33≤ (1-x-y-z) ≤0.95.

For example, in Chemical Formula 1, 0≤z≤0.05, 0<x≤0.33, and 0≤y≤0.33.

For example, in Chemical Formula 1, (1-x-y-z)≥0.4, for example (1-x-y-z)≥0.5, or (1-x-y-z)≥0.6.

According to an embodiment, in Chemical Formula 1, z may be 0.

In the nickel-based positive active material, the nickel content may be greater than or equal to about 0.5 mol%, for example, greater than or equal to about 0.55 mol%, or greater than or equal to about 0.57 mol%, and for example, less than or equal to about 0.95 mol%, less than or equal to about 0.9 mol%, less than or equal to about 0.8 mol%, less than or equal to about 0.7 mol%, less than or equal to about 0.65 mol%, less than or equal to about 0.63 mol%, for example, about 0.5 mol% to about 0.95 mol%, about 0.55 mol% to about 0.9 mol%, or about 0.57 mol% to about 0.63 mol% based on a total amount of transition metals (Ni, Co, and Mn). In the nickel-based positive active material, the nickel content may be larger than each of the manganese content and the cobalt content.

In the nickel-based positive active material, the nickel content may be larger than the content of the other transition metals based on 1 mol of total transition metals. In this way, when the nickel-based positive electrode active material having a large nickel content is used as the first positive active material and the second positive active material, lithium diffusivity may be high, conductivity may be good, and a higher capacity at the same voltage may be obtained iwhen the rechargeable lithium battery employing the positive electrode including the same is used.

According to an embodiment, a pressed density of the positive active material for a rechargeable lithium battery including the first positive active material and the second positive active material may be for example greater than or equal to about 3.2 g/cc, greater than or equal to about 3.25 g/cc, greater than or equal to about 3.3 g/cc, greater than or equal to about 3.35 g/cc, or greater than or equal to about 3.4 g/cc. According to an embodiment, the pressed density of the positive active material for a rechargeable lithium battery may be obtained by inserting about 3 g of the positive active material for a rechargeable lithium battery in a pressed density-measuring device and then, pressing it with a power of about 3 tons for about 30 seconds. Accordingly, the positive active material for a rechargeable lithium battery including the first and second positive active materials having different sizes according to an embodiment of the present disclosure may secure a positive electrode having excellent electrode plate density.

Hereinafter, a positive active material for a rechargeable lithium battery according to another embodiment of the present disclosure is explained.

The positive active material for a rechargeable lithium battery according to embodiments of the present disclosure includes the first positive active material including the secondary particle including at least two agglomerated primary particles, wherein at least one part of the primary particles has a radial arrangement structure; and the second positive active material has the monolith structure. In addition, the secondary particle of the present embodiment may further include particles having a monolith structure. For example, the positive active material of the present embodiment may have substantially the same constitution as described above except that the secondary particle of the first positive active material may additionally further include particles having a monolith structure. Hereinafter, the substantially same composition will not be described in detail.

Specifically, the particles having a monolith structure may be adhered to an external part of the secondary particle or dispersed in an internal part thereof. For example, the particles having a monolith structure may be agglomerated (physically and/or chemically bound) to the secondary particle, or may not be physically and/or chemically bound to the secondary particle but may fill pores in the secondary particle and/or contact walls of the pores.

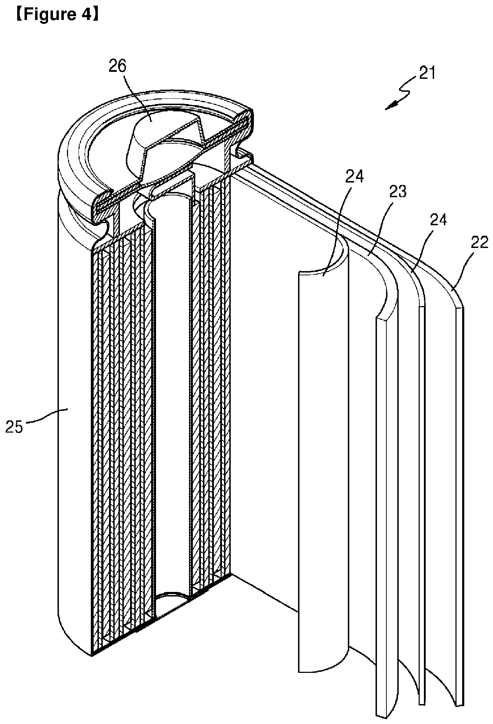

Hereinafter, referring to FIG. 4, a structure of a rechargeable lithium battery including a positive electrode including the positive active material for a rechargeable lithium battery according to an embodiment and a method of manufacturing the rechargeable lithium battery are illustrated.

FIG. 4 is a schematic view showing a structure of a rechargeable lithium battery including a positive electrode including a positive active material for a rechargeable lithium battery according to an embodiment.

Referring to FIG. 4, a rechargeable lithium battery 21 includes a positive electrode 23 including the positive active material for a rechargeable lithium battery, a negative electrode 22, and a separator 24.

The positive electrode 23 and the negative electrode 22 may be manufactured by coating a composition for forming a positive active material layer and a composition for forming a negative active material layer on each current collector, respectively, and drying the same.

The composition for the positive active material layer may be prepared by mixing a positive active material, a conductive agent, a binder, and a solvent, wherein the positive active material is the nickel-based active material represented by Chemical Formula 1.

The binder may help binding between the active materials, conductive agent, and/or the like as well as binding these materials on a current collector, and may be added in an amount of about 1 to about 50 parts by weight based on a total weight of 100 parts by weight of the positive active material. Non-limiting examples of such a binder may include polyvinylidene fluoride, polyvinyl alcohol, carboxymethyl cellulose (CMC), starch, hydroxypropyl cellulose, recycled cellulose, polyvinylpyrrolidone, tetrafluoroethylene, polyethylene, polypropylene, an ethylene-propylene-diene terpolymer (EPDM), sulfonated EPDM, a styrene butadiene rubber, a fluorine rubber, various copolymers, and/or the like. The amount thereof may be about 2 to about 5 parts by weight based on a total weight of 100 parts by weight of the positive active material. When the amount of the binder is within this range, the binding force of the active material layer to the current collector may be suitable or good.

The conductive agent is not particularly limited as long as it does not cause a chemical change of a battery and has conductivity. Non-limiting examples of the conductive agent may include graphite such as natural graphite and/or artificial graphite; a carbon-based material such as carbon black, acetylene black, Ketjenblack^{®}, channel black, furnace black, lamp black, summer black and/or the like; a conductive fiber such as a carbon fiber and/or a metal fiber, and/or the like; carbon fluoride; a metal powder such as an aluminum and/or nickel powder; zinc oxide, a conductive whisker such as potassium titanate, and/or the like; and a conductive metal oxide such as a titanium oxide; a conductive material such as a polyphenylene derivative, and/or the like.

The amount of the conductive agent may be about 2 to about 5 parts by weight based on a total weight of 100 parts by weight of the positive active material. When the amount of the conductive agent is within this range, the conductivity characteristics of the resultant electrode may be improved.

Non-limiting examples of the solvent may be N-methyl pyrrolidone, and/or the like.

The amount of the solvent may be about 1 part by weight to about 10 parts by weight based on a total weight of 100 parts by weight of the positive active material. When the amount of the solvent is within this range, the active material layer may be easily formed.

The positive current collector may have a thickness of about 3 µm to about 500 µm. The material for the positive current collector is not particularly limited as long as it does not cause a chemical change in the battery and has high conductivity, and may be for example, stainless steel, aluminum, nickel, titanium, heat-treated carbon, and/or aluminum or stainless steel that is surface treated with carbon, nickel, titanium, and/or silver. The current collector may have fine irregularities formed on its surface to increase adhesion to the positive active material, and may be provided in any suitable form such as a film, a sheet, a foil, a net, a porous body, foam, and/or a non-woven fabric body.

Separately, a negative active material, a binder, a conductive agent, and a solvent may be mixed to prepare a composition for a negative active material layer.

The negative active material may be or include a material capable of intercalating and deintercalating lithium ions. Non-limiting examples of the negative active material may be a carbon-based material such as graphite and/or carbon, a lithium metal, an alloy thereof, a silicon oxide-based material, and/or the like. According to an embodiment of the present disclosure, silicon oxide may be used.

The binder may be added in an amount of about 1 part by weight to about 50 parts by weight based on a total weight of 100 parts by weight of the negative active material. Non-limiting examples of the binder may be the same as available for the positive electrode.

The conductive agent may be used in an amount of about 1 part by weight to about 5 parts by weight based on a total weight of 100 parts by weight of the negative active material. When the amount of the conductive agent is within this range, the conductivity characteristics of the resultant electrode may be improved.

An amount of the solvent may be about 1 part by weight to about 10 parts by weight based on a total weight, 100 parts by weight of the negative active material. When the amount of the solvent is within the range, the work for forming the negative active material layer may become easy.

The conductive agent and the solvent may use the same materials as those used in manufacturing the positive electrode.

The negative current collector may have a thickness of about 3 µm to about 500 µm. The material for the negative current collector is not particularly limited as long as it does not cause a chemical change in the battery and has high conductivity. Non-limiting examples may include copper; stainless steel; aluminum; nickel; titanium; heat-treated carbon; copper and/or stainless steel surface-treated with carbon, nickel, titanium, and/or silver; an aluminum-cadmium alloy; and/or the like. The negative current collector may have fine irregularities formed on the surface to increase the adhesion to the negative active materials, and may be provided in any suitable form such as a film, a sheet, a foil, a net, a porous body, foam, and/or a non-woven fabric body, similar to the positive current collector.

A separator may be between the positive electrode and the negative electrode, each being manufactured according to the above processes.

The separator may have a pore diameter of about 0.01 µm to about 10 µm, and a thickness of about 5 µm to about 300 µm. Non-limiting examples may include an olefin-based polymer such as polypropylene, polyethylene, and/or the like; and/or a sheet or a nonwoven fabric formed of a glass fiber. When a solid electrolyte such as a polymer is used as the electrolyte, the solid electrolyte may also serve as the separator.

A lithium salt-containing non-aqueous electrolyte may be composed of a non-aqueous electrolyte and a lithium salt. The non-aqueous electrolyte may be a non-aqueous electrolyte, an organic solid electrolyte, or an inorganic solid electrolyte.

The non-aqueous electrolyte may be or include, for example, an aprotic organic solvent such as N-methyl-2-pyrrolidinone, propylene carbonate, ethylene carbonate, butylene carbonate, dimethyl carbonate, diethyl carbonate, gamma-butyro lactone, 1,2-dimethoxyethane, 2-methyl tetrahydrofuran, dimethylsulfoxide, 1,3-dioxolane, formamide, N,N-dimethyl formamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, a propylene carbonate derivative, a tetrahydrofuran derivative, ether, methyl propionate, ethyl propionate, and/or the like.

The organic solid electrolyte may be, for example, a polyethylene derivative, a polyethylene oxide derivative, a polypropylene oxide derivative, a phosphoric acid ester polymer, polyester sulfide, polyvinyl alcohol, polyvinylidene fluoride, and/or the like.

The inorganic solid electrolyte may be, for example, LisN, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂, and/or the like.

The lithium salt may be a material that is readily soluble in the non-aqueous electrolyte, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, lithium chloroborate, lower aliphatic lithium carbonates, tetraphenyl lithium borate, lithium imides, and/or the like.

The positive electrode 23, the negative electrode 22, and the separator 24 are wound or folded and accommodated in the battery case 25. Then, an organic electrolyte solution is injected into the battery case 25 and the cap assembly 26 is sealed to complete the rechargeable lithium battery 21 as shown in FIG. 4.

The battery case 25 may have any suitable shape or form such as cylindrical, prismatic, thin film, and/or the like. In some embodiments, the rechargeable lithium battery 20 may be a large-scale thin film-type battery. The rechargeable lithium battery may be a lithium ion battery. A cell structure including a separator between the positive electrode and the negative electrode may be formed. The cell structure may be stacked in a bi-cell structure and then impregnated with an organic electrolyte solution, and the resulting product may be placed in a pouch and sealed to manufacture a lithium ion polymer battery. In addition, a plurality of cell structures may be stacked to form a battery pack, which may be used in devices requiring a high capacity and a high power. For example, the battery pack may be used in a laptop, a smart phone, an electric vehicle, and/or the like.

In addition, the rechargeable lithium battery may have improved storage stability, cycle-life characteristics, and high rate capacity characteristics at a high temperature, and may be used in an electric vehicle (EV). For example, it may be used in a hybrid vehicle such as a plug-in hybrid electric vehicle (PHEV).

The rechargeable lithium battery according to an embodiment may exhibit improved electrode plate density with respect to the positive active material, and thus may have suitable electrochemical characteristics for a rechargeable lithium battery.

In addition, the rechargeable lithium battery according to an embodiment may have a minimized or rediced the residual lithium concentration in the positive electrode, minimizing or reducing the generation of gas in the cell through the reaction between the residual lithium and the electrolyte solution, and thus may have high cell stability, and gelation caused by residual lithium may be minimized or reduced to form a stable positive electrode.

Hereinafter, a method of preparing the positive active material for a rechargeable lithium battery according to an embodiment is described.

A method of preparing the positive active material for a rechargeable lithium battery according to an embodiment may include forming a first nickel-based oxide using a first precursor, obtaining a second nickel-based oxide using a second precursor, mixing the first nickel-based oxide and the second nickel-based oxide and subjecting the mixture in an oxidizing gas atmosphere to a third heat-treatment to obtain a positive active material including the first positive active material and the second positive active material. Hereinafter, the method is explained in more detail.

First, the first precursor is subjected to a first heat-treatment under an oxidizing gas atmosphere to obtain the first nickel-based oxide.

Specifically, the oxidizing gas atmosphere may use an oxidizing gas such as oxygen and/or air. The first heat-treatment may be, for example, performed at about 800 °C to about 900 °C. A time for the first heat-treatment may be selected according to the heat-treatment temperature and the like, and for example, may be about 5 to about 15 hours. The first precursor according to an embodiment may include Li, Ni, Co, Mn, and optionally an element selected from boron (B), magnesium (Mg), calcium (Ca), strontium (Sr), barium (Ba), titanium (Ti), vanadium (V), chromium (Cr), iron (Fe), copper (Cu), zirconium (Zr), and aluminum (Al); the elements may be included in set or predetermined mole ratios, for example, within ranges satisfying each stoichiometric ratio.

On the other hand, the first precursor may be obtained by mixing a first composite metal hydroxide with a lithium-based material.

The first composite metal hydroxide may include at least nickel, and may further include elements selected from the above group within a range satisfying a stoichiometric ratio.

The lithium-based material may serve as a lithium source, so that the positive active material for a rechargeable lithium battery according to an embodiment may function as a positive active material. The type or kind of lithium-based material according to an embodiment is not particularly limited and may include, for example, Li₂CO₃, LiOH, a hydrate thereof, or a combination thereof.

On the other hand, the second precursor, separately from the first precursor, may be subjected to second heat-treatment under an oxidizing gas atmosphere. The resulting material may be pulverized to obtain the second nickel-based oxide including particles having a monolith structure.

Specifically, the oxidizing gas atmosphere may use an oxidizing gas such as oxygen and/or air. The second heat-treatment may be, for example, performed at about 800 °C to about 1000 °C. A time for the second heat-treatment may be selected according to the heat-treatment temperature and/or the like, and for example, may be about 5 to about 20 hours. The second precursor may be obtained by mixing a second composite metal hydroxide with the aforementioned lithium-based material.

The second composite metal hydroxide may include Li, Ni, Co, Mn, and optionally an element selected from boron (B), magnesium (Mg), calcium (Ca), strontium (Sr), barium (Ba), titanium (Ti), vanadium (V), chromium (Cr), iron (Fe), copper (Cu), zirconium (Zr), and aluminum (Al); the elements may be included in set or predetermined mole ratios, for example, within ranges satisfying each stoichiometric ratio. Among them, the elements including at least nickel and a hydroxyl group may be bound in a range satisfying a stoichiometric ratio. An average particle diameter of the second composite metal hydroxide may be, for example, greater than or equal to about 0.5 µm, greater than or equal to about 1.0 µm, greater than or equal to about 1.5 µm, greater than or equal to about 2.0 µm, and for example, less than or equal to about 8 µm, less than or equal to about 7 µm, less than or equal to about 6 µm, less than or equal to about 5 µm, or less than or equal to about 4 µm.

In an embodiment, the second composite metal hydroxide may have a specific surface area of about 1 m²/g to about 30 m²/g, as measured using a BET method. For example, the specific surface area may be about 2 m²/g to about 25 m²/g, for example, about 5 m²/g to about 25 m²/g. When the second composite metal hydroxide has a specific surface area satisfying this range, the second nickel-based oxide may be pulverized into particles having a monolith structure within the above average particle diameter range during a pulverization process described below, thereby reducing an amount of residual lithium.

Subsequently, a mixture of the second composite metal hydroxide subjected to the second heat-treatment and the lithium-based material may be pulverized to obtain the second nickel-based oxide including the particles having a monolith structure within the above average particle diameter range. The second nickel-based oxide may have a smaller average particle diameter than the above first nickel-based oxide. The pulverization may be performed using any suitable pulverizing device such as a jet mill and/or the like.

The particles having a monolith structure and the average particle diameter range described above may not be agglomerated, but dispersed as described above. The amount and/or a mixing ratio of the lithium-based material and the second composite metal hydroxide are not particularly limited in an embodiment, but while satisfying a condition of forming a second positive active material having a monolith structure, they may simultaneously be adjusted within a suitable range to minimize or reduce the amount of excess lithium salt and a non-reaction lithium-based material residue after preparing the nickel-based active material.

In an embodiment, a mole ratio (Li/Me) of lithium (Li) relative to the rest of metal elements (Me) except for the lithium in the second precursor may be, for example, greater than or equal to about 0.8, greater than or equal to about 0.85, greater than or equal to about 0.9, greater than or equal to about 0.95, or greater than or equal to about 1.0, and for example, less than or equal to about 1.05, less than or equal to about 1.04, or less than or equal to about 1.03.

On the other hand, a mole ratio of Ni, Co, Mn, and selective elements in the first composite metal hydroxide and the second composite metal hydroxide may be freely selected within a range for preparing the nickel-based positive active material represented by Chemical Formula 1, but a mole ratio of Ni may be adjusted to be larger than the mole ratios of Co, Mn, and selective elements. Otherwise, the second precursor according to an embodiment may be adjusted to have the same mole ratio as the above first precursor.

Subsequently, the first nickel-based oxide may be mixed with the second nickel-based oxide. In an embodiment, a mixing ratio of the first nickel-based oxide and the second nickel-based oxide may be, for example, about 9:1 to about 5:5, about 8:2 to about 5:5, about 8:2 to about 6:4, or about 7:3 based on weight. When the mixing ratio of the first nickel-based oxide and the second nickel-based oxide satisfies the above ranges, a positive active material for a rechargeable lithium battery may have a low residual lithium compound concentration, and may also secure excellent electrode plate density when used to manufacture an electrode plate.

Subsequently, the mixture of the first nickel-based oxide and the second nickel-based oxide may be subjected to a third heat-treatment under an oxidizing gas atmosphere.

The oxidizing gas atmosphere may include an oxidizing gas such as oxygen and/or air.

The third heat-treatment may be performed, for example, at about 800 °C to about 1000 °C.

A time for the third heat-treatment may be selected according to the heat-treatment temperature and/or the like, and for example, may be about 3 to about 10 hours.

When the heat-treatment is completed, the temperature may be cooled down to room temperature to prepare a positive active material for a rechargeable lithium battery according to the above embodiment. The positive active material for a rechargeable lithium battery may include the first positive active material including the secondary particle including at least two agglomerated primary particles, along with the second positive active material having a monolith structure as described above, and at least one part of the primary particles in the secondary particle may be arranged in a radial shape.

The above preparing method may provide a positive active material for a rechargeable lithium battery within the above residual lithium concentration range without a residual lithium removal process such as a separately additional washing process and/or the like. In addition, the positive active material and a rechargeable lithium battery including the same may show excellent stability and electrochemical characteristics, as described above.

Hereinafter, the embodiments are illustrated in more detail with reference to examples.

### [Mode for Invention]

### 1. Precursor Process

### (1) Preparing Process of First Nickel-based Oxide

A nickel-based active material precursor (Ni_{0.6}Co_{0.2}Mn_{0.2}OH) was synthesized using a co-precipitation method to prepare a first nickel-based oxide. In the following preparing process, the nickel-based active material precursor was synthesized using a raw metal material such as nickel sulfate, cobalt sulfate, and manganese sulfate.

### [First Act: 1.5 kW/m³, NH₄OH 0.30 M, pH 10 to 11, reaction time: 6 hours]

First, ammonium hydroxide having a concentration of 0.30 M was put in a reactor. The raw metal material and a complexing agent were added thereto at a rate of 90 mL/min and 10 mL/min, respectively, with an agitation power of 1.5 kW/m³ at a reaction temperature of 50°C to start the reaction.

The reaction proceeded for 6 hours, during which time NaOH was injected to maintain pH. The core particles obtained from the reaction had an average size of about 5.5 µm to 6.5µm. The second act was performed as follows.

### [Second Act: 1.0 kW/m³, NH₄OH 0.35 M, pH 10 to 11, reaction time: 6 hours]

The complexing agent was maintained at a concentration of 0.35 M by changing the addition rates of the raw metal material and the complexing agent to 100 mL/min and 15 mL/min, respectively, while the reaction temperature was maintained at 50°C. The reaction proceeded for 6 hours, during which time NaOH was injected to maintain pH. Herein, the agitation power was adjusted to 1.0 kW/m³, which is lower than that of the first act. The particles having a core and a middle layer, as obtained from the reaction, had an average size of about 9 µm to about 10µm. The third act was performed as follows.

### [Third Act: 1.0 kW/m³, NH₄OH 0.40 M, pH 10 to 11, reaction time: 4 hours]

The addition rates of the raw metal material and the complexing agent were changed to 150ml/min and 20 ml/min, respectively, to adjust the concentration of the complexing agent to 0.40 M, while the reaction temperature was maintained at 50°C. The reaction proceeded for 4 hours, during which time NaOH was injected to maintain pH. Herein, the agitation power was maintained to be the same as in the second act.

### [Post-processing]

For post-processing, the resultant material was washed and dried with hot air at about 150°C for 24 hours to obtain a nickel-based active material precursor.

Subsequently, the nickel-based active material precursor and LiOH particles having an average size of about 10µm were mixed in (at) a mole ratio of 1:1 and subjected to a first heat-treatment under an air atmosphere at about 800°C for 6 hours to obtain a first nickel-based oxide (LiNi_{0.6}Co_{0.2}Mn_{0.2}O₂).

The obtained first nickel-based oxide had an average particle diameter of about 12.5 µm.

### (2) Preparing Process of Second Nickel-based Oxide

Separately from the above, nickel sulfate (NiSO₄·6H₂O), cobalt sulfate (CoSO₄·7H₂O), and manganese sulfate (MnSO₄·H₂O) in a mole ratio of 6:2:2 were dissolved in distilled water as a solvent to prepare a mixed solution. An ammonium hydroxide (NH₄OH) dilute solution and sodium hydroxide (NaOH) as a precipitator were prepared as precursors for forming a complexing compound. Subsequently, the raw metal material mixed solution, the ammonia hydroxide, and the sodium hydroxide were added to a reactor. The obtained mixture was reacted for 15 hours, while being stirred. Subsequently, the obtained slurry solution in the reactor was filtered, washed with distilled water having high purity, and dried for 24 hours to yield a second composite metal hydroxide (Ni_{0.6}Co_{0.2}Mn_{0.2} (OH)₂) powder. The second composite metal hydroxide powder had an average particle diameter of about 3.2 µm and a specific surface area of about 13 m²/g as measured using a BET method. The second composite metal hydroxide powder and Li₂CO₃ were mixed to satisfy a Li/(Ni+Co+Mn) ratio of 1.02, put in a furnace, and subjected to a second heat-treatment under an air atmosphere at 910 °C for 11 hours to obtain a second nickel-based oxide. Subsequently, the second nickel-based oxide was pulverized for about 30 minutes and then separated/dispersed as a plurality of second positive active material particles having the above monolith structure.

### 2. Preparing Process of Positive Active Material

Subsequently, the first nickel-based oxide and the pulverized second nickel-based oxide including the plurality of second positive active material particles having the monolith structure were mixed in a weight ratio of 7:3, put in a furnace, and subjected to a third heat-treatment under an oxygen atmosphere at about 850 °C for 6 hours. Then, the furnace was cooled down to room temperature to obtain a positive active material for a rechargeable lithium battery wherein the first and second positive active materials were mixed.

The positive active material for a rechargeable lithium battery was a mixture of the first positive active material, in which at least one part of each of the primary particles was arranged in a radial shape and the primary particles were agglomerated into a secondary particle, and the second positive active material having a monolith structure, as described above.

### Comparative Example 1

A positive active material for a rechargeable lithium battery according to Comparative Example 1 was obtained according to the same method as in Example 1, except for not pulverizing the second nickel-based oxide, and instead directly mixing it with the first nickel-based oxide.

### Comparative Example 2

A positive active material for a rechargeable lithium battery according to Comparative Example 2 was prepared according to the same method as in Example 1, except for using the second composite metal hydroxide having an average particle diameter of 3.2 µm and a specific surface area of 33 m²/g measured using a BET method, and not pulverizing it after the second heat-treatment but directly mixing it with the first nickel-based oxide.

### Comparative Example 3

The first composite metal hydroxide, the second composite metal hydroxide, and lithium hydroxide (LiOH·H₂O) were mixed to satisfy a ratio of Li/(Ni+Co+Mn) = 1.02.

Subsequently, the mixed material was put in a furnace, subjected to a first heat-treatment at about 850 °C for 6 hours, and then subjected to a second heat-treatment at the same temperature for 6 hours. The furnace was cooled down to room temperature to obtain a positive active material for a rechargeable lithium battery according to Comparative Example 3.

Each positive active material for a rechargeable lithium battery according to the Example and Comparative Examples was analyzed to measure the residual amount of Li₂CO₃ and LiOH and a concentration of residual Li, and the results are shown in Table 1.

In additions, the pressed densities of the each of the positive active materials for a rechargeable lithium battery according to Example and Comparative Examples were measured, and the results are shown in Table 1.

**[Table 1]**

| | Residual Li₂CO₃ (wt%) | Residual LiOH (wt%) | Residual Li concentration (ppm) | Pressed density (g/cc) |
|---|---|---|---|---|
| Example | 0.105 | 0.265 | 967 | 3.43 |
| Comparative Example 1 | 0.109 | 0.271 | 1000 | 3.22 |
| Comparative Example 2 | 0.116 | 0.277 | 1022 | 3.22 |
| Comparative Example 3 | 0.221 | 0.395 | 1542 | 3.19 |

Referring to Table 1, the positive active material for a rechargeable lithium battery according to the Example showed overall small Li₂CO₃ and LiOH residue amounts and a low residual lithium concentration compared with the Comparative Examples and particularly, Comparative Example 3. On the other hand, Comparative Examples 1 and 2 generally showed a similar residual lithium concentration.

On the other hand, the positive active material for a rechargeable lithium battery according to the Example showed excellent pressed density compared with the positive active materials according to the Comparative Examples. The positive active material for a rechargeable lithium battery according to the Example showed a pressed density of about 3.43 g/cc, which is 70 % higher than the theoretical density of about 4.8 g/cc of a positive active material having the same composition. Accordingly, the positive active material for a rechargeable lithium battery according to the Example may minimize a residual lithium concentration and simultaneously have a low pressed density, and thus may form an improved electrode plate compared with the positive active materials according to the Comparative Examples.

On the other hand, each coin half-cell was manufactured using the positive active materials according to each of the Example and Comparative Examples.

96 g of the positive active material secondary particles for a rechargeable lithium battery according to each Example or Comparative Example, 2 g of polyvinylidene fluoride, and 137 g of N-methylpyrrolidone as a solvent, and 2 g of carbon black as a conductive agent were mixed and degassed using a blender to obtain a uniformly-dispersed slurry for a positive active material layer.

The slurry for a positive active material layer was coated on an aluminum foil and thus formed into a thin electrode plate, dried at 135 °C for greater than or equal to 3 hours, and compressed and vacuum-dried to manufacture a positive electrode.

The positive electrode and a lithium metal foil as a counter electrode were used to manufacture a 2032 type coin half-cell. A separator formed of a porous polyethylene (PE) film (thickness: about 16 µm) was placed between the positive electrode and the lithium metal counter electrode, and an electrolytic solution was injected thereinto to manufacture the 2032 type coin cell. Herein, the electrolyte solution was prepared by mixing ethylenecarbonate (EC) and ethylmethylcarbonate (EMC) in a volume ratio of 3:5 and dissolving 1.1 M LiPF₆ therein.

The coin half-cells according to the Example and Comparative Examples were each charged using a constant current (0.1 C) and constant voltage (4.3 V, 0.05 C cut-off) condition, paused for 10 minutes, discharged down to 3.0 V under a constant current (0.1 C) condition, during which the charge/discharge capacity and efficiency of each of the coin half-cells were measured, and the results are shown in Table 2.

On the other hand, charge and discharge capacities (mAh/g) per a weight were measured for the coin half-cells using the positive active materials according to the Example or Comparative Examples, and multiplied by the compression density (g/cc) to obtain a volumetric capacity (mAh/cc) for each of the coin half-cells according to the Example and Comparative Examples, and the results are shown in Table 2.

**[Table 2]**

| | 0.1C charge capacity (mAh/g) | 0.1C discharge capacity (mAh/g) | 0.1C charge/discharge efficiency (%) | Volumetric Capacity (mAh/cc) |
|---|---|---|---|---|
| Example | 199.0 | 179.3 | 90.1 | 615.0 |
| Comparative Example 1 | 199.1 | 139.2 | 90.0 | 577.0 |
| Comparative Example 2 | 198.9 | 181.7 | 91.4 | 585.1 |
| Comparative Example 3 | 197.9 | 183.5 | 92.7 | 585.4 |

Referring to Table 2, the coin half-cell according to the Example showed similar charge/discharge characteristics to the Comparative Examples, and accordingly, the nickel-based active material according to an embodiment may be used as a positive active material for a rechargeable battery.

On the other hand, the coin half-cell according to the Example showed a high volumetric capacity compared with the Comparative Examples, and accordingly, the positive active material for a rechargeable lithium battery according to Example may provide a rechargeable battery cell having excellent electrochemical characteristics.

## Claims

1. A positive active material for a rechargeable lithium battery, comprising:
a first positive active material comprising a secondary particle comprising at least two agglomerated primary particles, at least one part of the primary particles having a radial arrangement structure; and
a second positive active material having a monolith structure,
wherein the radial arrangement structure is a structure wherein the primary particle has a thickness that is smaller than a long-axis length and the thickness direction is arranged perpendicular to or within an angle of ±5° from perpendicular with respect to a direction toward the center of the secondary particle; and the monolith structure is a structure in which the morphology of each particle is separated and/or dispersed in independent phases separated from each other rather than a coagulated form, and
both of the first positive active material and the second positive active material comprise a nickel-based positive active material.

2. The positive active material of claim 1, wherein the second positive active material is included in an amount of about 10 wt% to about 50 wt% based on a total weight of the positive active material for a rechargeable lithium battery.

3. The positive active material of any one of the preceding claims, wherein:
the secondary particle comprises a radial arrangement structure, or
the secondary particle comprises an internal part comprising an irregular porous structure and an external part comprising a radial arrangement structure.

4. The positive active material of any one of the preceding claims, wherein the primary particles have a plate shape, and
a long-axis of at least one part of the primary particles is arranged in a radial direction.

5. The positive active material of any one of the preceding claims, wherein an average length measured according to the description of the primary particles is about 0.01 µm to about 5 µm.

6. The positive active material of any one of the preceding claims, wherein an average particle diameter measured according to the description of the second positive active material is about 0.05 µm to about 10 µm.

7. The positive active material of any one of the preceding claims, wherein a residual lithium concentration in the positive active material for a rechargeable lithium battery is less than or equal to about 1200 ppm.

8. The positive active material of any one of the preceding claims, wherein the first positive active material is represented by Chemical Formula 1:
[Chemical Formula 1] Liₐ(Ni_{1-x-y-z}CoₓMn_{y}M_{z})O₂,
wherein, in Chemical Formula 1, M is an element selected from boron (B), magnesium (Mg), calcium (Ca), strontium (Sr), barium (Ba), titanium (Ti), vanadium (V), chromium (Cr), iron (Fe), copper (Cu), zirconium (Zr), and aluminum (Al),
0.95≤a≤1.3, x≤ (1-x-y-z), y≤ (1-x-y-z), 0<x<1, 0≤y<1, and 0≤z<1.

9. The positive active material of any one of the preceding claims, wherein the second positive active material is represented by Chemical Formula 1:
[Chemical Formula 1] Liₐ(Ni_{1-x-y-z}CoₓMn_{y}M_{z})O₂
wherein, in Chemical Formula 1, M is an element selected from boron (B), magnesium (Mg), calcium (Ca), strontium (Sr), barium (Ba), titanium (Ti), vanadium (V), chromium (Cr), iron (Fe), copper (Cu), zirconium (Zr), and aluminum (Al),
0.95≤a≤1.3, x≤ (1-x-y-z), y≤ (1-x-y-z), 0<x<1, 0≤y<1, and 0≤z<1.

10. A method of preparing a positive active material for a rechargeable lithium battery, comprising:
subjecting a first precursor to a first heat-treatment in an oxidizing gas atmosphere to obtain a first nickel-based oxide,
subjecting a second precursor to a second heat-treatment in an oxidizing gas atmosphere to obtain a second nickel-based oxide,
mixing the first nickel-based oxide and the second nickel-based oxide to yield a mixture, and subjecting the mixture to a third heat-treatment in an oxidizing gas atmosphere to obtain a positive active material comprising a first positive active material and a second positive active material,
wherein the second nickel-based oxide comprises particles having a monolith structure in which the morphology of each particle is separated and/or dispersed in independent phases separated from each other rather than a coagulated form.

11. The method of claim 10, wherein obtaining the second nickel-based oxide comprises pulverizing a resulting material obtained after subjecting the second precursor to the second heat-treatment into the particles having a monolith structure.

12. The method of claim 10 or 11, wherein the second precursor is obtained by mixing a second composite metal hydroxide having a specific surface area in a range of about 1 m²/g to about 30 m²/g, as measured using a BET method, with a lithium-based material.

13. The method of claim 10 to 12, wherein a mixing ratio of the first nickel-based oxide and the second nickel-based oxide is about 9:1 to about 5:5 based on a weight ratio.

14. A rechargeable lithium battery, comprising
a positive electrode comprising the positive active material for a rechargeable lithium battery of claim 1;
a negative electrode; and
an electrolyte between the positive electrode and the negative electrode.

## Patentansprüche

1. Positives Aktivmaterial für eine Lithiumsekundärbatterie, die Folgendes umfasst:
ein erstes positives Aktivmaterial, das ein sekundäres Partikel umfasst, das mindestens zwei agglomerierte Primärpartikel umfasst, wobei mindestens ein Teil der Primärpartikel eine radial angeordnete Struktur aufweist; und
ein zweites positives Aktivmaterial mit einer monolithischen Struktur,
wobei die radial angeordnete Struktur eine Struktur ist, bei der das Primärpartikel eine Dicke hat, die kleiner ist als die Länge der Längsachse, und die Dickenrichtung senkrecht zu oder innerhalb eines Winkels von ± 5° von der Senkrechten bezüglich einer Richtung zum Zentrum des sekundären Partikels angeordnet ist, und die monolithische Struktur eine Struktur ist, bei der die Morphologie jedes Partikels in unabhängigen, voneinander getrennten Phasen und nicht in einer koagulierten Form getrennt und/oder dispergiert ist, und
sowohl das erste positive Aktivmaterial als auch das zweite positive Aktivmaterial ein positives Aktivmaterial auf Nickelbasis umfassen.

2. Positives Aktivmaterial nach Anspruch 1, wobei das zweite positive Aktivmaterial in einem Anteil von etwa 10 Gew.-% bis etwa 50 Gew.-% eingeschlossen ist, bezogen auf ein Gesamtgewicht des positiven Aktivmaterials für eine Lithiumsekundärbatterie.

3. Positives Aktivmaterial nach einem der vorhergehenden Ansprüche, wobei:
das sekundäre Partikel eine radial angeordnete Struktur umfasst, oder
das sekundäre Partikel einen inneren Abschnitt umfasst, der eine unregelmäßige poröse Struktur umfasst, und einen äußeren Abschnitt, der eine radial angeordnete Struktur umfasst.

4. Positives Aktivmaterial nach einem der vorhergehenden Ansprüche, wobei die Primärpartikel eine Plättchenform aufweisen, und
eine Längsachse von mindestens einem Teil der Primärpartikel in radialer Richtung angeordnet ist.

5. Positives Aktivmaterial nach einem der vorhergehenden Ansprüche, wobei eine durchschnittliche Länge, gemessen gemäß der Beschreibung der Primärpartikel, etwa 0,01 µm bis etwa 5 µm beträgt.

6. Positives Aktivmaterial nach einem der vorhergehenden Ansprüche, wobei der durchschnittliche Partikeldurchmesser, gemessen gemäß der Beschreibung des zweiten positiven Aktivmaterials, etwa 0,05 µm bis etwa 10 µm beträgt.

7. Positives Aktivmaterial nach einem der vorhergehenden Ansprüche, wobei eine Restlithiumkonzentration in dem positiven Aktivmaterial für eine Lithiumsekundärbatterie weniger als oder gleich etwa 1 200 ppm beträgt.

8. Positives Aktivmaterial nach einem der vorhergehenden Ansprüche, wobei das erste positive Aktivmaterial durch die chemische Formel 1 dargestellt wird:
[Chemische Formel 1] Liₐ(Ni_{1-x-y-z}CoₓMn_{y}M_{z})O₂,
wobei in der chemischen Formel 1 M ein Element ist, das ausgewählt ist aus Bor (B), Magnesium (Mg), Calcium (Ca), Strontium (Sr), Barium (Ba), Titan (Ti), Vanadium (V), Chrom (Cr), Eisen (Fe), Kupfer (Cu), Zirkonium (Zr) und Aluminium (Al),
0,95 ≤ a ≤ 1,3, x ≤ (1-x-y-z), y ≤ (1-x-y-z), 0 < x < 1, 0 ≤ y < 1, und 0 ≤ z < 1.

9. Positives Aktivmaterial nach einem der vorhergehenden Ansprüche, wobei das zweite positive Aktivmaterial durch die chemische Formel 1 dargestellt wird:
[Chemische Formel 1] Liₐ(Ni_{1-x-y-z}CoₓMn_{y}M_{z})O₂
wobei in der chemischen Formel 1 M ein Element ist, das ausgewählt ist aus Bor (B), Magnesium (Mg), Calcium (Ca), Strontium (Sr), Barium (Ba), Titan (Ti), Vanadium (V), Chrom (Cr), Eisen (Fe), Kupfer (Cu), Zirkonium (Zr) und Aluminium (Al),
0,95 ≤ a ≤ 1,3, x ≤ (1-x-y-z), y ≤ (1-x-y-z), 0 < x < 1, 0 ≤ y < 1, und 0 ≤ z < 1.

10. Verfahren zum Herstellen eines positiven Aktivmaterials für eine Lithiumsekundärbatterie, das Folgendes umfasst:
Unterziehen eines ersten Vorläufers einer ersten Wärmebehandlung in einer oxidierenden Gasatmosphäre, um ein erstes Oxid auf Nickelbasis zu erhalten,
Unterziehen eines zweiten Vorläufers einer zweiten Wärmebehandlung in einer oxidierenden Gasatmosphäre, um ein zweites Oxid auf Nickelbasis zu erhalten,
Vermischen des ersten Oxids auf Nickelbasis und des zweiten Oxids auf Nickelbasis, um eine Mischung zu erhalten, und Unterziehen der Mischung einer dritten Wärmebehandlung in einer oxidierenden Gasatmosphäre, um ein positives Aktivmaterials zu erhalten, das ein erstes positives Aktivmaterial und ein zweites positives Aktivmaterial umfasst,
wobei das zweite Oxid auf Nickelbasis Partikel umfasst, die eine monolithische Struktur aufweisen, in der die Morphologie jedes Partikels eher in unabhängigen, voneinander getrennten Phasen als in einer koagulierten Form getrennt und/oder dispergiert ist.

11. Verfahren nach Anspruch 10, wobei das Erhalten des zweiten Oxids auf Nickelbasis das Pulverisieren eines resultierenden Materials umfasst, das durch Unterziehen des zweiten Vorläufers der zweiten Wärmebehandlung erhalten wird, in Partikel, die eine monolithische Struktur aufweisen.

12. Verfahren nach Anspruch 10 oder 11, wobei der zweite Vorläufer durch Mischen eines zweiten Metallhydroxydverbundmaterials mit einer spezifischen Oberfläche im Bereich von etwa 1 m²/g bis etwa 30 m²/g, gemessen nach der BET-Methode, mit einem Material auf Lithiumbasis erhalten wird.

13. Verfahren nach Anspruch 10 bis 12, wobei das Mischungsverhältnis des ersten Oxids auf Nickelbasis und des zweiten Oxids auf Nickelbasis etwa 9:1 bis etwa 5:5 beträgt, bezogen auf ein Gewichtsverhältnis.

14. Lithiumsekundärbatterie, umfassend
eine positive Elektrode, die das positive Aktivmaterial für eine Lithiumsekundärbatterie nach Anspruch 1 umfasst,
eine negative Elektrode, und
einen Elektrolyten zwischen der positiven Elektrode und der negativen Elektrode.

## Revendications

1. Matériau actif positif pour une batterie rechargeable au lithium, comprenant :
un premier matériau actif positif comprenant une particule secondaire comprenant au moins deux particules primaires agglomérées, au moins une partie des particules primaires ayant une structure d'agencement radial ; et
un deuxième matériau actif positif ayant une structure monolithique,
dans lequel la structure d'agencement radial est une structure dans laquelle la particule primaire a une épaisseur inférieure à la longueur de l'axe long et la direction de l'épaisseur est agencée perpendiculairement ou à un angle de ± 5° avec la perpendiculaire à une direction vers le centre de la particule secondaire ; et la structure monolithique est une structure où la morphologie de chaque particule est séparée et/ou dispersée dans des phases indépendantes séparées les unes des autres plutôt que sous une forme coagulée, et
le premier matériau actif positif et le deuxième matériau actif positif comprennent un matériau actif positif à base de nickel.

2. Matériau actif positif selon la revendication 1, dans lequel le deuxième matériau actif positif est inclus en une quantité d'environ 10 % en poids à environ 50 % en poids en fonction d'un poids total du matériau actif positif pour une batterie au lithium rechargeable.

3. Matériau actif positif selon l'une quelconque des revendications précédentes, dans lequel :
la particule secondaire comprend une structure d'agencement radial, ou
la particule secondaire comprend une partie interne comprenant une structure poreuse irrégulière et une partie externe comprenant une structure d'agencement radial.

4. Matériau actif positif selon l'une quelconque des revendications précédentes, dans lequel les particules primaires ont une forme d'assiette, et
un axe long d'au moins une partie des particules primaires est agencé dans une direction radiale.

5. Matériau actif positif selon l'une quelconque des revendications précédentes, dans lequel une longueur moyenne mesurée selon la description des particules primaires est d'environ 0,01 µm à environ 5 µm.

6. Matériau actif positif selon l'une quelconque des revendications précédentes, dans lequel le diamètre moyen des particules mesuré selon la description du deuxième matériau actif positif est compris entre 0,05 µm et 10 µm environ.

7. Matériau actif positif selon l'une quelconque des revendications précédentes, dans lequel une concentration résiduelle de lithium dans le matériau actif positif pour une batterie rechargeable au lithium est inférieure ou égale à environ 1 200 ppm.

8. Matériau actif positif selon l'une quelconque des revendications précédentes, dans lequel le premier matériau actif positif est représenté par la Formule chimique 1 :
[Formule chimique 1] Liₐ(Ni_{1-x-y-z}CoₓMn_{y}M_{z})O₂,
dans lequel, dans la Formule chimique 1, M est un élément choisi parmi le bore (B), le magnésium (Mg), le calcium (Ca), le strontium (Sr), le baryum (Ba), le titane (Ti), le vanadium (V), le chrome (Cr), le fer (Fe), le cuivre (Cu), le zirconium (Zr) et l'aluminium (Al),
0,95 ≤ a ≤ 1,3, x ≤ (1-x-y-z), y ≤ (1-x-y-z), 0 < x < 1, 0 ≤ y < 1, et 0 ≤ z < 1.

9. Matériau actif positif selon l'une quelconque des revendications précédentes, dans lequel le deuxième matériau actif positif est représenté par la Formule chimique 1 :
[Formule chimique 1] Liₐ(Ni_{1-x-y-z}CoₓMn_{y}M_{z})O₂
dans lequel, dans la Formule chimique 1, M est un élément choisi parmi le bore (B), le magnésium (Mg), le calcium (Ca), le strontium (Sr), le baryum (Ba), le titane (Ti), le vanadium (V), le chrome (Cr), le fer (Fe), le cuivre (Cu), le zirconium (Zr) et l'aluminium (Al),
0,95 ≤ a ≤ 1,3, x ≤ (1-x-y-z), y ≤ (1-x-y-z), 0 < x < 1, 0 ≤ y < 1, et 0 ≤ z < 1.

10. Procédé de préparation d'un matériau actif positif pour une batterie rechargeable au lithium, comprenant :
la soumission d'un premier précurseur à un premier traitement thermique dans une atmosphère de gaz oxydant pour obtenir un premier oxyde à base de nickel,
la soumission d'un deuxième précurseur à un deuxième traitement thermique dans une atmosphère de gaz oxydant pour obtenir un deuxième oxyde à base de nickel,
le mélange du premier oxyde à base de nickel et du deuxième oxyde à base de nickel pour obtenir un mélange, et la soumission du mélange à un troisième traitement thermique dans une atmosphère de gaz oxydant pour obtenir un matériau actif positif comprenant un premier matériau actif positif et un deuxième matériau actif positif,
dans lequel le deuxième oxyde à base de nickel comprend des particules ayant une structure monolithique dans laquelle la morphologie de chaque particule est séparée et/ou dispersée en phases indépendantes séparées les unes des autres plutôt que sous une forme coagulée.

11. Procédé selon la revendication 10, dans lequel l'obtention du deuxième oxyde à base de nickel comprend la pulvérisation d'un matériau résultant obtenu après la soumission du deuxième précurseur au deuxième traitement thermique dans les particules ayant une structure monolithique.

12. Procédé selon la revendication 10 ou 11, dans lequel le deuxième précurseur est obtenu en mélangeant un deuxième hydroxyde métallique composite ayant une surface spécifique comprise entre environ 1 m²/g et environ 30 m²/g, telle que mesurée à l'aide d'une méthode BET, avec un matériau à base de lithium.

13. Procédé selon les revendications 10 à 12, dans lequel le rapport de mélange du premier oxyde à base de nickel et du deuxième oxyde à base de nickel est d'environ 9:1 à environ 5:5 en fonction d'un rapport de poids.

14. Batterie rechargeable au lithium, comprenant
une électrode positive comprenant le matériau actif positif pour une batterie rechargeable au lithium selon la revendication 1 ;
une électrode négative ; et
un électrolyte entre l'électrode positive et l'électrode négative.
